# EUROPEAN PATENT SPECIFICATION

(11) **EP 3 383 571 B1**
(45) Date of publication and mention of the grant of the patent: **19.10.2022**
(21) Application number: 16871142.2
(22) Date of filing: 20.09.2016
(51) Int. Cl.: B23D 47/12, B23D 45/00, B28D 1/04

(54) **HIGH POWER FLAT SAW WITH BLADE SHAFT DRIVE**
HOCHLEISTUNGSFLACHSÄGE MIT EINEM SÄGEBLATTWELLENANTRIEB
SCIE PLATE À HAUTE PUISSANCE COMPRENANT UN ENTRAÎNEMENT D'ARBRE DE LAME

(30) Priority: 02.12.2015 SE 1551579
(43) Date of publication of application: 10.10.2018
(73) Proprietor: Husqvarna AB, 561 82 Huskvarna (SE)
(72) Inventor: SANDWALL, Johan, 443 70 Gråbo (SE)
(86) International application number: PCT/SE2016/050876
(87) International publication number: WO 2017/095291

(56) References cited:
- DE-A1-102006 007 585
- GB-A- 2 373 746
- US-A- 4 456 303
- US-A- 4 500 303
- US-A- 5 690 391
- US-A1- 2002 117 161
- US-A1- 2007 142 147
- US-A1- 2007 164 598
- US-A1- 2011 294 615
- US-B1- 6 318 353
- US-B1- 6 318 353

## Description

### TECHNICAL FIELD

The teachings herein relates to flat saws, and more specifically to a blade shaft drive for a high powered flat saw for large diameter saw blades.

### BACKGROUND

Flat saws are commonly used for cutting concrete and asphalt. Flat saws often use internal combustion engines or electric motors for supply of power to both the saw blade and for propulsion of the entire flat saw. To transfer the power from the motor to the blade, belt drive is an often used technique. The blade is a rotating circular blade, and a commonly used rule of thumb for achieving efficient saw performance is that the saw blade should rotate such that the outer periphery of the blade travels at optimal designed speed or not more than approximately 65 m/s. This is a design criteria for many saw blades. As flat saws are designed to operate with a certain saw blade diameter, or at least with a defined range of saw blade diameters, the gear ratio of the belt drive from the motor to the saw blade is adapted to fulfill the above criteria. However, especially in the field of high powered flat saws with large diameter saw blades, this often means that substantial reduction gearing such as gearboxes or jackshafts is necessary between the output from the motor and the saw blade shaft. This causes unwanted power losses and is further complicated. The cutting depth is limited by blade shaft pulley size and the pulley size will also be a restriction to get correct blade speed. Another problem which is frequent with the blade drive is belt slippage and/or excessive wear. This is even more common when the belt ages, stretches and/or wears for instance when an internal combustion engine having only one or two cylinders is used as this causes noticeable power pulses from pistons due to engine behavior. The load which is exerted on the saw blade as it cuts through material also varies, which further contributes to the above mentioned problems. It has thus been a long standing need for a blade shaft drive for a high powered flat saw which alleviates some or all of the above mentioned problems. Related art can be found in for instance US20150217472A1, US8998684B2, US20120180773A1, CN203031689U, GB2436604A, US9151366B2, KR675664B1, US9097313B2, KR2008035251A, US20020117161A1, US20120068525A1, US7222618B2, US4664645A, US5429420A.

Document US 2007/164598 A1 discloses a high power saw having a large diameter saw blade, said flat saw comprising a motor and a blade shaft drive, wherein said blade shaft drive comprises a first pulley and a second pulley and a belt, said second pulley being directly connected to a blade shaft, said first pulley having a smaller diameter than the diameter of said second pulley, and wherein said drive further comprises a variable belt tensioner arranged to apply a variable force to said belt, wherein the first pulley is directly connected to a power take out shaft being an extension of a crankshaft/rotor of said motor, wherein said first and said second pulleys are directly rotationally connected by the belt, wherein the belt is a low profile belt, and wherein said belt tensioner further comprises a rotatable idler pulley for contact with the belt and a pivot arm connecting the idler pulley.

### SUMMARY

It is an object of the teachings herein to provide a high powered flat saw having a large diameter saw blade comprising a blade shaft drive which is improved over prior art. This object is achieved by a flat saw having the features set forth in the appended independent claim; preferred embodiments thereof being defined in the related dependent claims.

According to a first aspect of the invention herein, a high power flat saw is provided, having a large diameter saw blade. Said flat saw comprises a motor and a blade shaft drive. The blade shaft drive comprises a first pulley and a second pulley and a belt, the second pulley being directly connected to a blade shaft. The first pulley has a smaller diameter than the diameter of the second pulley, and the blade shaft drive further comprises a variable belt tensioner arranged to apply a variable force on the flat side or on the ribbed side of said belt. The first pulley is directly connected to a power take out shaft being an extension of the crankshaft/rotor of said motor and said first and said second pulleys are directly rotationally connected by the belt, wherein said belt is a low profile poly V belt, thus providing suitable peripheral speed for said saw blade. The variable belt tensioner of the blade shaft drive comprises a resilient member, said belt tensioner further comprises a rotatable idler pulley for contact with the belt and a pivot arm connecting the idler pulley to the resilient member.

By providing a blade shaft drive for a flat saw for large diameter saw blades which is able to reach sufficient reduction ratios for reaching desired peripheral saw blade speeds and thus desired performance, it is possible to remove any jack shafts or other additional transmissions from the drive. Thereby, a more efficient flat saw with reduced complexity can be provided.

The belt tensioner is beneficial for enabling use of a low profile poly V belt, since it stabilizes the resting tension in the belt and will take up slack in the belt due to load fluctuations and power pulses from the motor.

In one embodiment of the teachings herein, the resilient member of the belt tensioner is a rubber torsion bar. The rubber tension bar requires little or no lubrication and is subjected to only small amounts of wear since metal to metal friction is reduced.

In a further embodiment, the blade is attached to the blade shaft via a flange, wherein the ratio between the diameter of said flange and the diameter of said blade is approximately at least 1 to 6. The ratio between the diameters of the flange and the saw blade is important for safety reasons, if the flange is made smaller in relation to the saw blade the risk of wobbling and uneven cuts increases. The flange will also be a restriction in cutting depth for any given saw blade diameter.

According to the invention, the reduction ratio of the blade shaft drive from the power take out shaft to the blade shaft is in the range of approximately 1:3.6 to approximately 1:1.5, preferably approximately 1:2 for a blade diameter of approximately 30" (760 mm). The above reduction ratios are beneficial in that they enable the blade shaft drive to reduce the rotational speed from the power take out shaft of the motor to the blade shaft sufficiently to reach the preferred peripheral speeds of the saw blade for saw blade diameters above 25".

In one embodiment of the teachings herein, the outer diameter of said second pulley is smaller than 1/6 of the diameter of the saw blade. Thus, the diameter of the second pulley and the surrounding belt will not be a limiting factor for the saw depth, since it will have a smaller diameter than the flange.

In one embodiment, the saw blade diameter is approximately 25" (635 mm) or larger.

In a further embodiment, the low profile belt, such as a poly V belt, has an ISO 9982 standardized belt profile selected from the group consisting of PH, PJ, PK, PL and PM, a preferred belt profile being PK. The above belt is a low profile belt, with ribs that does not protrude extensively. As these types of belts allow smaller pulley diameters and bending radius compared to regular V-belts used on flat saws, the ratio can be increased.

In one embodiment, the motor is an internal combustion engine with a rated power output larger than 25 hp (about 18.6 kW).

In one further embodiment, the internal combustion engine comprises between one and four cylinders, preferably two cylinders.

In one embodiment, the motor is an electric motor with a rated power output larger than 25 hp (about 18.6 kW).

In yet one further embodiment, the low profile belt comprises between 17 and 30 longitudinal ribs, preferably approximately 25 longitudinal ribs for a blade diameter of approximately 30" (760 mm). The number of ribs on the low profile belt is closely linked to the friction between the pulleys and the belt, and thereby also to the power that the belt is able to transfer. The above ranges have proven beneficial in that the belt is able transfer sufficient amounts of power without risking any significant belt slippage.

### BRIEF DESCRIPTION OF THE DRAWINGS

Embodiments of the teachings herein will be described in further detail in the following with reference to the accompanying drawings which illustrate non-limiting examples on how the embodiments can be reduced into practice and in which:
Fig. 1 shows a perspective view of a flat saw according to one embodiment,
Fig. 2 shows a side view of a schematic outline of the blade shaft drive according to one embodiment,
Fig. 3 shows a cross sectioned top view of a schematic outline of the blade shaft drive according to one embodiment, and
Fig. 4 shows a cross sectioned view of a low profile belt such as a poly V belt according to one embodiment.

### DETAILED DESCRIPTION OF EMBODIMENTS

The disclosed embodiments will now be described more fully hereinafter with reference to the accompanying drawings, in which certain embodiments of the invention are shown. Like numbers refer to like elements throughout.

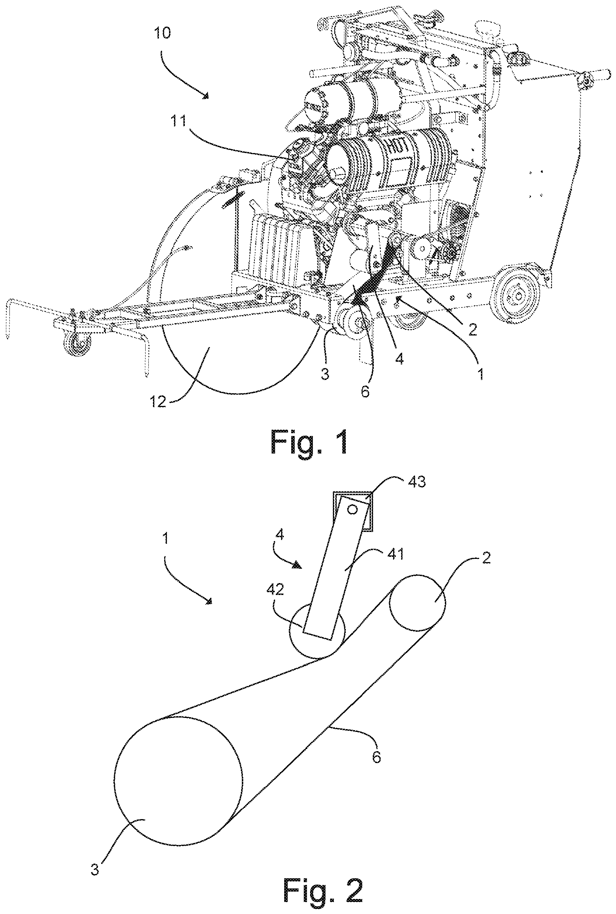

In Fig. 1, a perspective view of a high power flat saw 10 according to one embodiment is shown. The flat saw 10 comprises a motor 11, preferably an internal combustion engine 11 with a rated power output larger than 25 hp (18.6 kW) and comprising between one and four cylinders. The combustion engine 11 is configured to operate at between approximately 1000 RPM to 4000 RPM, preferably at its top peak of torque and power at approximately 3000 RPM to 3600 RPM. The industry standard RPM for combustion engines must be taken into consideration. The motor 11 may also be an electrical motor 11, configured to achieve a power output of at least 25 hp (18.6 kW). The electrical motor may be for instance a brushless DC motor, a switched reluctance motor, a universal motor, or an AC motor. These examples should not be seen as limiting, any electrical motor which can deliver the specified power output may be used. The saw blade 12 is a large diameter saw blade 12, having a diameter of approximately 25" (about 635 mm) or larger. The motor 11 is connected via a blade shaft drive 1 to the blade shaft 9 and the saw blade 12. The blade shaft drive 1 comprises a low profile belt 6 such as a poly V belt for powering the blade shaft 9 and thus the saw blade 12.

The blade shaft drive 1 further comprises a first pulley 2 and a second pulley 3, the first pulley 2 having a smaller diameter than the second pulley 3 to achieve a reduction ratio between the motor 11 and the saw blade shaft 9. This is necessary since most saw blades 12 are designed to function optimally when the peripheral speed of the blade is around or below 65 m/s while performing cuts. Thus, the blade shaft drive 1 must reduce the rotational speed from the motor 11 power take out shaft 8 to the blade shaft 9. The power take out shaft 8, or output shaft, is the shaft through which power is delivered by the motor 11 and is preferably an extension of the crankshaft or rotor of said motor 11. According to the invention, a reduction ratio of between 1:3.6 and 1:1.5 is defined depending on the actual diameter of the saw blade. A preferred reduction ratio is approximately 1:2 for a blade diameter of approximately 30" (760 mm). The above reduction ratios are required for large diameter saw blades 12, i.e. blades with a diameter in excess of 635 mm (or 25 "). The first 2 and second 3 pulleys are directly rotationally connected by the low profile belt 6, thus rotation of one pulley will cause rotation of the other and no intermediate shaft or transmission is needed for achieving above mentioned reduction ratios.

With reference to Figs 1, 2 and 3 simultaneously, the first pulley 2 is connected to the power take out shaft 8, which preferably is an extension of the crankshaft/rotor of said motor 11, thus avoiding any gearing between the power take out shaft 8 and the crankshaft/rotor of the motor 11. Such an extension may in one embodiment be a separate shaft such as a stub shaft connected to the crank shaft/rotor for instance by means of a spline connection or clutch. The opening in the motor housing through which the extension of crank shaft extends may further comprise a bushing and/or a bearing to support the shaft 8 and to ensure that for instance lubricant will not leak out from the motor 11.

The second pulley 3 is connected to the blade shaft 9 which in turn is connected to the saw blade via a flange 7. The first 2 and second 3 pulleys may be connected to their respective shafts 8, 9 by means of spline connections, fasteners or any other commonly known means for fixing a pulley to a shaft.

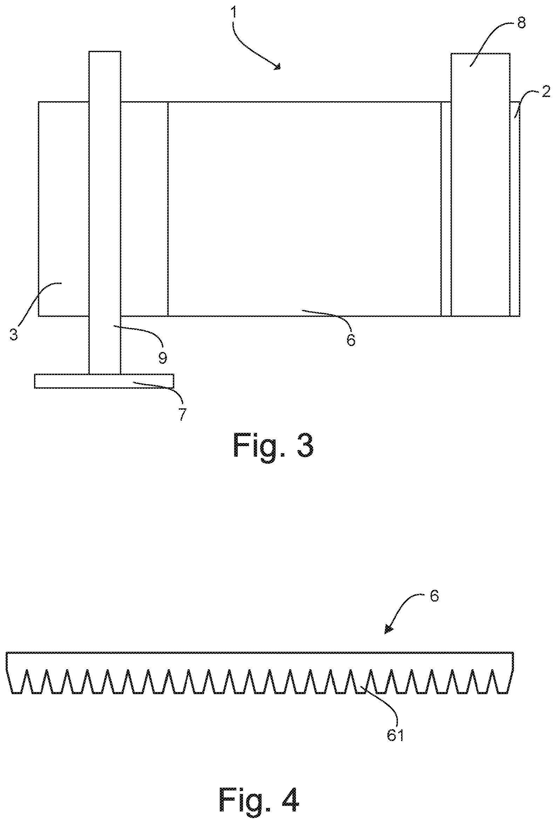

The blade shaft 9 may, which is shown in Fig. 1, extend to the opposite side of the flat saw 10 in relation to the blade shaft drive 1 and connect via the flange 7 to the saw blade 12 on that side of the saw 10. Another alternative is shown in Fig. 3, where the flange 7 and the blade shaft drive 1 are located on the same side of the flat saw 10. The blade shaft 9 is rotatably attached to the flat saw 10. The saw blade 12 is fitted to the blade shaft flange 7 by means of fasteners, such as one or several nuts, screws or bolts. The diameter of the flange 7 is at least one sixth of the diameter of the saw blade, which is required to avoid wobbling and uneven cuts. As it is desired to achieve increased saw depths for any given saw blade diameter, the above relationship between the blade and the flange is a restriction as safety can by no means be compromised for achieving larger saw depths.

The saw depth also comes in conflict with the desire to achieve a high reduction ratio for the blade shaft drive 1, since it is in this regard desired to increase the size of the second pulley 3 and to decrease the size of the first pulley 2. The second pulley 3 should not be larger than the flange 7 since this will limit saw depth. Flat saws are often configured such that the saw depth can be varied. This can be achieved in a number of ways, one of which may be to fit a wheel on a fixture which can be lowered and raised by the operator of the saw 10. By lowering and raising the wheel, the saw pivots around the two rear wheels (in the case where the saw blade 12 is mounted to the front of the saw 10 as is shown in Fig. 1) which allows the saw depth to be varied. When the saw depth is increased, the limiting component of the saw 10 should preferably be the flange 7 and not the second pulley 3. Furthermore, a decrease in the size of the first pulley 2 is also limited by for instance the size of the power take out shaft 8 and belt properties.

In prior art, to achieve a suitable reduction ratio in view of the above, gearboxes or jackshafts are commonly used. This however causes the overall efficiency of the flat saw to decrease and adds unnecessary complexity to the blade shaft drive. It is especially problematic to achieve the correct reduction ratio for high power flat saws with large saw blade diameters since a larger blade requires a higher reduction ratio. The applicant has realized that by providing a poly V belt 6 as specified in this disclosure having a low belt profile in combination with a belt tensioner 4, it is possible to achieve sufficient reduction ratio while removing the need for a gearbox or a jackshaft. The functionality of such a blade shaft drive 1 is improved by the belt tensioner 4 being variable, meaning that it is arranged to vary the force applied to the belt 6. In that way, the belt tensioner 4 is dynamic in that it provides a varying, dynamic force which is not fixed or static. The variable belt tensioner 4 significantly reduces the risk of belt slippage and the tensioner 4 will take up slack in the belt 6 due to fluctuations and power pulses from the combustion engine 11.

As can be seen in Fig. 2, the belt tensioner 4 applies a force to the side of the low profile belt 6 which does not comprise ribs 61, i.e. the flat side. It is however also possible that the belt tensioner 4 applies a force to the ribbed side of the belt 6. The applied force varies as required to keep the belt 6 tensioned. The belt tensioner 4 comprises a pivot arm 41 and an idler pulley 42. The idler pulley 42 is rotatably connected to the pivot arm 41 and is arranged such that it comes into contact with the belt 6. The pivot arm 41 is, at the end opposite the idler pulley 42, connected to a resilient member 43 such as a torsion bar or a torsion spring which allows the pivot arm 41 to pivot in a resilient manner and apply a variable force to the belt 6. The resilient member 43 may in one embodiment be a rubber torsion bar. In Fig. 3, the blade shaft drive 1 can be seen from a top view also showing the blade shaft 9 and the power take out shaft 8. The power take out shaft 8, as mentioned above, is preferably an extension of the crank shaft/rotor of the motor 11.

As large amounts of torque and power is transferred through the power take out shaft 8 to the first pulley 2, it is beneficial to keep the diameter of the power take out shaft 8 as large as possible to enable it to withstand high loads. This however comes in conflict with the desire to reduce the diameter of the first pulley 2 to increase the reduction ratio, which emphasizes the need to keep the protrusion of the ribs of the belt 6, i.e. the belt profile, as low as possible. Since reducing the protrusion of the ribs 61 of a belt 6 reduces its ability to transfer torque and increases for instance the risk of belt slippage, this is not an obvious solution to reduce the diameter of the first pulley 2.

However, as mentioned above, the addition of the belt tensioner 4 which harmonizes the tension in the belt 6 during different load conditions and the selection of the number of ribs of the belt 6 as specified below will make it possible to provide a blade shaft drive 1 with a low profile belt 6. This has been achieved through extensive testing, in which the applicant discovered that it is possible to achieve the desired reduction ratio, thus reaching a maximum velocity of 65 m/s of the peripheral edge of the saw blade while avoiding any further transmission means for high powered flat saws with large diameter saw blades. With reference to Fig. 4, a cross sectioned view of an exemplary low profile poly V belt 6 can be seen. The belt 6 preferably comprises 25 longitudinal ribs 61, however the number of ribs 61 may be in the range of 17 to 30. The first 2 and second 3 pulleys naturally comprises corresponding numbers of grooves for interaction with the ribs 61 of the belt 6. The belt 6 profile may be any one of the ISO 9982 standardized profiles PH, PJ, PK, PL and PM. As these profiles are described in ISO 9982, they will not be described in further detail in this disclosure. A preferred belt profile is PK. However, other low profile poly-V belt profiles defined or not defined in ISO 9982 may also be used.

It should be mentioned that the invention is by no means limited to the embodiments described herein, and several modifications are feasible as the scope of the invention is defined in the appended claims. For instance, two or more separate poly V belts could be used.

## Claims

1. High power flat saw (10) having a large diameter saw blade (12), said flat saw (10) comprising a motor (11) and a blade shaft drive (1), wherein said blade shaft drive (1) comprises a first pulley (2) and a second pulley (3) and a belt (6), said second pulley (3) being directly connected to a blade shaft (9), said first pulley (2) having a smaller diameter than the diameter of said second pulley (3), and wherein said drive (1) further comprises a variable belt tensioner (4) arranged to apply a variable force to said belt (6), wherein
the first pulley (2) is directly connected to a power take out shaft (8) being an extension of a crankshaft/rotor of said motor (11), wherein said first (2) and said second (3) pulleys are directly rotationally connected by the belt (6), wherein the belt (6) is a low profile poly V belt (6), and wherein the variable belt tensioner (4) of the blade shaft drive (1) comprises a resilient member (43), said belt tensioner (4) further comprises a rotatable idler pulley (42) for contact with the belt (6) and a pivot arm (41) connecting the idler pulley (42) to the resilient member (43), where the reduction ratio of the blade shaft drive (1) from the power take out shaft (8) to the blade shaft (9) is in the range of between 1:3.6 and 1:1.5, preferably approximately 1:2 for a blade diameter of approximately 760 mm, and where the variable belt tensioner (4) is adapted to harmonize the tension in the belt (6) during different load conditions.

2. A high power flat saw according to claim 1, wherein the resilient member (43) is a rubber torsion bar.

3. A high power flat saw according to any one of the preceding claims, wherein the blade (12) is releasably connected to the blade shaft (9) via a flange (7), and wherein the ratio between the diameter of said flange (7) and the diameter of said blade (12) is at least 1 to 6.

4. A high power flat saw according to any one of the preceding claims, wherein the outer diameter of said second pulley (3) is smaller than 1/6 of the diameter of the saw blade.

5. A high power flat saw according to any one of the preceding claims, wherein the saw blade (12) diameter is approximately 25" (about 635 mm) or larger.

6. A high power flat saw according to any one of the preceding claims, wherein the low profile belt (6) has an ISO 9982 standardized belt profile selected from the group consisting of PH, PJ, PK, PL and PM, a preferred belt profile being PK.

7. A high power flat saw according to any one of the preceding claims, wherein the motor (11) is an internal combustion engine (11) with a rated power output larger than 25 hp (18.6 kW).

8. A high power flat saw according to any one of claims 1 to 6, wherein the motor (11) is an electrical motor with a rated power output larger than 25 hp (18.6 kW).

9. A high power flat saw according to claim 7, wherein the internal combustion engine (11) comprises between one and four cylinders, preferably 2 cylinders.

10. A high power flat saw according to any one of the preceding claims, wherein the low profile belt (6) comprises between 17 and 30 longitudinal ribs (61), preferably approximately 25 longitudinal ribs (61).

## Patentansprüche

1. Hochleistungsfugenschneider (10), der ein Sägeblatt (12) mit großem Durchmesser aufweist, wobei der Fugenschneider (10) einen Motor (11) und einen Blattwellenantrieb (1) aufweist, wobei der Blattwellenantrieb (1) eine erste Riemenscheibe (2) und eine zweite Riemenscheibe (3) und einen Riemen (6) aufweist, wobei die zweite Riemenscheibe (3) direkt mit einer Blattwelle (9) verbunden ist, wobei die erste Riemenscheibe (2) einen kleineren Durchmesser als der Durchmesser der zweiten Riemenscheibe (3) aufweist, und wobei der Antrieb (1) ferner einen variablen Riemenspanner (4) umfasst, der dazu angeordnet ist, eine variable Kraft auf den Riemen (6) aufzubringen, wobei die erste Riemenscheibe (2) direkt mit einer Abtriebswelle (8) verbunden ist, die eine Verlängerung einer Kurbelwelle/eines Rotors des Motors (11) ist, wobei die erste (2) und die zweite (3) Riemenscheibe direkt drehend durch den Riemen (6) verbunden sind, wobei der Riemen (6) ein Keilrippenriemen (6) mit niedrigem Profil ist, und wobei der variable Riemenspanner (4) des Blattwellenantriebs (1) ein elastisches Element (43) umfasst, wobei der Riemenspanner (4) ferner eine drehbare Spannrolle (42) für einen Kontakt mit dem Riemen (6) und einen Schwenkarm (41), der die Spannrolle (42) mit dem elastischen Element (43) verbindet, umfasst, wobei das Untersetzungsverhältnis des Blattwellenantriebs (1) von der Abtriebswelle (8) zu der Blattwelle (9) im Bereich von zwischen 1:3,6 und 1:1,5, vorzugsweise ca. 1:2 bei einem Blattdurchmesser von ca. 760 mm, liegt und wobei der variable Riemenspanner (4) dazu ausgelegt ist, die Spannung in dem Riemen (6) während unterschiedlicher Lastbedingungen abzugleichen.

2. Hochleistungsfugenschneider nach Anspruch 1, wobei das elastische Element (43) ein Gummitorsionsstab ist.

3. Hochleistungsfugenschneider nach einem der vorhergehenden Ansprüche, wobei das Blatt (12) mit der Blattwelle (9) über einen Flansch (7) lösbar verbunden ist, und wobei das Verhältnis zwischen dem Durchmesser des Flansches (7) und dem Durchmesser des Blatts (12) mindestens 1 zu 6 beträgt.

4. Hochleistungsfugenschneider nach einem der vorhergehenden Ansprüche, wobei der Außendurchmesser der zweiten Riemenscheibe (3) kleiner als 1/6 des Durchmessers des Sägeblatts ist.

5. Hochleistungsfugenschneider nach einem der vorhergehenden Ansprüche, wobei der Durchmesser des Sägeblatts (12) ca. 25" (etwa 635 mm) oder größer ist.

6. Hochleistungsfugenschneider nach einem der vorhergehenden Ansprüche, wobei der Riemen (6) mit niedrigem Profil ein gemäß ISO 9982 genormtes Riemenprofil aufweist, das ausgewählt ist aus der Gruppe bestehend aus PH, PJ, PK, PL und PM, wobei ein bevorzugtes Riemenprofil PK ist.

7. Hochleistungsfugenschneider nach einem der vorhergehenden Ansprüche, wobei der Motor (11) eine Brennkraftmaschine (11) mit einer Nennleistung von größer als 25 PS (18,6 kW) ist.

8. Hochleistungsfugenschneider nach einem der Ansprüche 1 bis 6, wobei der Motor (11) ein Elektromotor mit einer Nennleistung von größer als 25 PS (18,6 kW) ist.

9. Hochleistungsfugenschneider nach Anspruch 7, wobei die Brennkraftmaschine (11) zwischen einem und vier Zylindern, vorzugsweise 2 Zylinder, umfasst.

10. Hochleistungsfugenschneider nach einem der vorhergehenden Ansprüche, wobei der Riemen (6) mit niedrigem Profil zwischen 17 und 30 Längsrippen (61), vorzugsweise ca. 25 Längsrippen (61), umfasst.

## Revendications

1. Scie plate à haute puissance (10) ayant une lame de scie de grand diamètre (12), ladite scie plate (10) comprenant un moteur (11) et un entraînement d'arbre de lame (1), dans laquelle ledit entraînement d'arbre de lame (1) comprend une première poulie (2) et une seconde poulie (3) et une courroie (6), ladite seconde poulie (3) étant directement reliée à un arbre de lame (9), ladite première poulie (2) ayant un diamètre plus petit que le diamètre de ladite seconde poulie (3), et dans laquelle ledit entraînement (1) comprend en outre un tendeur de courroie variable (4) agencé pour appliquer une force variable à ladite courroie (6),
dans laquelle la première poulie (2) est directement reliée à un arbre de prise de force (8) qui est une extension d'un vilebrequin/rotor dudit moteur (11), dans laquelle lesdites première (2) et seconde (3) poulies sont directement reliées en rotation par la courroie (6), dans laquelle la courroie (6) est une courroie en V de faible hauteur (6), et dans laquelle le tendeur de courroie variable (4) de l'entraînement d'arbre de lame (1) comprend un organe élastique (43), ledit tendeur de courroie (4) comprend en outre un galet tendeur de courroie rotatif (42) pour un contact avec la courroie (6) et un bras pivotant (41) reliant le galet tendeur de courroie (42) à l'organe élastique (43), où le rapport de réduction de l'entraînement d'arbre de lame (1) entre l'arbre de prise de force (8) et l'arbre de lame (9) est compris dans la plage allant de 1:3.6 à 1:1.5, de préférence est égal à environ 1:2 pour un diamètre de lame d'environ 760 mm, et où le tendeur de courroie (4) est conçu pour harmoniser la tension dans la courroie (6) dans différentes conditions de charge.

2. Scie plate à haute puissance selon la revendication 1, dans laquelle l'organe élastique (43) est une barre de torsion en caoutchouc.

3. Scie plate à haute puissance selon l'une quelconque des revendications précédentes, dans laquelle la lame (12) est reliée de façon amovible à l'arbre de lame (9) par le biais d'une collerette (7), et dans laquelle le rapport entre le diamètre de ladite collerette (7) et le diamètre de ladite lame (12) est au moins de 1 à 6.

4. Scie plate à haute puissance selon l'une quelconque des revendications précédentes, dans laquelle le diamètre externe de ladite seconde poulie (3) est inférieur à 1/6 du diamètre de la lame de scie.

5. Scie plate à haute puissance selon l'une quelconque des revendications précédentes, dans laquelle le diamètre de la lame de scie (12) est d'environ 25" (environ 635 mm) ou plus.

6. Scie plate à haute puissance selon l'une quelconque des revendications précédentes, dans laquelle la courroie de faible hauteur (6) présente un profil de courroie normalisé conforme à l'ISO 9982 choisi parmi le groupe constitué de PH, PJ, PK, PL et PM, un profil de courroie préféré étant PK.

7. Scie plate à haute puissance selon l'une quelconque des revendications précédentes, dans laquelle le moteur (11) est un moteur à combustion interne (11) ayant une puissance de sortie nominale supérieure à 25 HP (18,6 kW).

8. Scie plate à haute puissance selon l'une quelconque des revendications 1 à 6, dans laquelle le moteur (11) est un moteur électrique ayant une puissance de sortie nominale supérieure à 25 HP (18,6 kW).

9. Scie plate à haute puissance selon la revendication 7, dans laquelle le moteur à combustion interne (11) comprend entre un et quatre cylindres, de préférence 2 cylindres.

10. Scie plate à haute puissance selon l'une quelconque des revendications précédentes, dans laquelle la courroie de faible hauteur (6) comprend entre 17 et 30 nervures longitudinales (61), de préférence environ 25 nervures longitudinales (61).
